# EUROPÄISCHE PATENTSCHRIFT

(11) **EP 1 282 547 B1**
(45) Veröffentlichungstag und Bekanntmachung des Hinweises auf die Patenterteilung: **31.12.2008**
(21) Anmeldenummer: 01940455.7
(22) Anmeldetag: 11.05.2001
(51) Int. Cl.: B60T 17/08, B60T 17/10, B60T 17/18, B60T 13/68, B60T 13/26

(54) **BREMSZYLINDER**
BRAKE CYLINDER
CYLINDRE DE FREIN

(30) Priorität: 11.05.2000 DE 10022904
(43) Veröffentlichungstag der Anmeldung: 12.02.2003
(73) Patentinhaber: KNORR-BREMSE SYSTEME FÜR NUTZFAHRZEUGE GMBH, 80809 München (DE)
(72) Erfinder: STUMPE, Werner, 70378 Stuttgart (DE); KLEMENT, Roland, 82407 Haunshofen (DE); SCHLICHENMAIER, Andreas, 74336 Brackenheim (DE)
(86) Internationale Anmeldenummer: PCT/EP2001/005375
(87) Internationale Veröffentlichungsnummer: WO 2001/085514

(56) Entgegenhaltungen:
- DE-A- 1 555 605
- GB-A- 1 108 637
- US-A- 3 385 173

## Beschreibung

Die Erfindung betrifft einen Bremszylinder mit einem mit einem Bremselement wenigstens mittelbar verbindbaren Druckelement, das einen ersten Kolben umfaßt, wobei der erste Kolben eine erste Wirkfläche aufweist, auf die der Druck eines ersten Druckmediums wenigstens mittelbar wirkt, wobei ein zweiter Kolben vorgesehen ist, der eine zweite Wirkfläche und eine dritte Wirkfläche umfaßt, wobei auf die zweite Wirkfläche der Druck des ersten Druckmediums wenigstens mittelbar wirkt, und wobei auf die dritte Wirkfläche der Druck eines zweiten Druckmediums wenigstens mittelbar wirkt.

Derartige Bremszylinder finden üblicherweise Verwendung bei Lastkraftwagen. Bei Ausfall eines Vorderachsbetriebsbremskreises gibt es insbesondere für die Erfüllung der Vorschriften bezüglich einer sogenannten Secondary Brake Performance, insbesondere bei leeren Sattelzugmaschinen Schwierigkeiten. Leere Sattelzugmaschinen haben konstruktionsbedingt so wenig Hinterachslast, daß die allein mit der Hinterachse erreichbare Bremsverzögerung nicht ausreichend ist.

Um diesem Problem zu entgehen und weiterhin eine ausreichende Bremsfunktionen insbesondere bei derartigen Notbremsfällen zu ermöglichen gibt es im Stand der Technik zwei Lösungsvorschläge.

Der erste Lösungsvorschlag verwendet Federspeicherbremszylinder an der Vorderachse. Durch entsprechende Aktivierung der Feststellbremsen kann so die sogenannte Secondary Brake Performance Forderung erfüllt werden. Da allerdings auch an der Hinterachse gebremst wird und die Federspeicherbremszylinder nur eine sehr schlechte Dosierung der Bremskraft ermöglichen, erfolgt häufig ein Blockieren der Räder an der Hinterachse in entsprechenden Bremssituationen. AuBerdem macht diese Lösung weitere Zusatzausrüstungen nötig, mit deren Hilfe ein Verspannen von Fahrzeugen, die mit Luftfederung ausgerüstet sind im Falle der Niveauverstellung zu vermeiden ist. Diese Zusatzausrüstungen sind mit sehr hohen Kosten verbunden.

Eine zweite Lösung wird in Sattelzugmaschinen der Firma Mercedes Benz vom Typ Actros verwendet. Hierbei findet ein Notbremsventil Verwendung, das auf einen Bremszylinder der Vorderachse, beispielsweise links, wirkt. Fällt der Betriebsbremskreis der Vorderachse aus, wird mit Hilfe der Druckluft aus dem Hinterachsbremskreis das Notbremsventil angesteuert und aus einem weiteren Kreis, z.B. dem Feststellbremskreis Druckluft in einen Bremszylinder der Vorderachse geleitet.

Ein derartiges Notbremsventil hat aufgrund der notwendigen Drosselwirkung des Ventils allerdings einen negativen Einfluß auf Schwell- und Lösezeiten des Betriebsbremssystems und auf die für die ABS-Funktion wichtigen Druckabbaugradienten, sofern der ABS-Druckabbau mit Steuereinrichtungen vorgenommen wird, die auf der Eingangsseite des Notbremsventils angebracht sind. Zudem benötigt das Notbremsventil einen relativ großen Einbauraum und relativ viel Einbauaufwand, so daß die Verwendung eines derartigen Notbremsventils in Lastkraftwagen zu erhöhten Kosten führt.

Aus dem gattungsgemäßen Dokument DE-A-1 555 605 ist eine Druckmittelbremse mit Hilfsbremse für Fahrzeuge unter Verwendung eines Membrankolbens für die Betriebsbremse und eines weiteren Membrankolbens für die Hilfbremse bekannt, wobei durch einen Zylinder mit einem fliegend darin geführten Kolben, wobei an beiden Enden des Zylinders je eine an eine Druckmittelzuleitung angeschlossene Bremskammer mit einem darin untergebrachten, den Zylinder abschließenden Membrankolben vorgesehen ist, wobei der im Zylinder geführte Kolben die Verbindung der beiden Membrankolben herstellt.

Aus der GB 1,108,637 ist ein Bremsaktuator bekannt, bei dem ein Hilfselement vorgesehen ist, das derart ausgestaltet ist, um auf einen Bremskolben einzuwirken.

Aus der US 3,385,173 A ist ein Zweikammerbremszylinder bekannt bei dem ein Hauptflüssigkeitsdrucksystem und ein Hilfsflüssigkeitsdrucksystem vorgesehen ist, mittels der Druck auf den Bremsmechanismus ausgeübt werden kann. Das Hilfsflüssigkeitsdrucksystem liefert automatisch Druck zu den Bremszylindern, wenn das Hauptflüssigkeitsdrucksystem des Fahrzeugs ausgefallen ist.

Der Erfindung liegt die Aufgabe zugrunde, einen Bremszylinder und eine Bremsanlage anzugeben, die ein Abbremsen eines Fahrzeugs auch bei Ausfall des Vorderachsbetriebsbremskreises unter Beachtung der Secondary Brake Performance Forderung ermöglicht. Die Lösung soll hierbei relativ kostengünstig sein und wenig Einbauaufwand erfordern.

Gelöst wird diese Aufgabe durch einen Bremszylinder mit einem mit einem Bremselement wenigstens mittelbar verbindbaren Druckelement, das einen ersten Kolben umfaßt, wobei der erste Kolben eine erste Wirkfläche aufweist, auf die der Druck eines ersten Druckmediums wenigstens mittelbar wirkt, wobei ein zweiter Kolben vorgesehen ist, der eine zweite Wirkfläche und eine dritte Wirkfläche umfaßt, wobei auf die zweite Wirkfläche der Druck des ersten Druckmediums wenigstens mittelbar wirkt, und wobei auf die dritte Wirkfläche der Druck eines zweiten Druckmediums wenigstens mittelbar wirkt, der dadurch weitergebildet ist, daß das erste Druckmedium ein Luftdruck oder ein Flüssigkeitsdruck ist, der im Vorderachsbremskreis eines Fahrzeugs vorherrscht.

Eine weitere erfindungsgemäße Lösung ist durch Weiterbildung des gattungsgemäßen Bremszylinders vorgesehen, wobei das zweite Druckmedium ein Luftdruck oder ein Flüssigkeitsdruck ist, der im Hinterachsbremskreis, im Anhängerbremskreis oder in einem weiteren Druckelement eines Fahrzeugs vorherrscht.

Eine dritte erfindungsgemäße Lösung sieht vor, einen gattunggemäßen Bremszylinder derart weiterzubilden, daß ein Druckausgleichselement vorgesehen ist, mittels dem der Druck in den Räumen ausgleichbar ist, die nicht mit dem Druckmediem beaufschlagt sind. Durch die letztgenannte erfindungsgemäße Lösung wird außerdem der Vorteil erzielt, daß geringere Drücke Verwendung finden können, um die gleiche Wirkung zu erzielen.

Durch diese erfindungsgemäße Lösung ist ein definiertes Bremsen auch in dem Fall, in dem der Vorderachsbetriebsbremskreis ausgefallen ist, möglich. Der Einbau dieses Bremszylinders ist ungefähr mit dem gleichen Aufwand verbunden wie der Einbau eines normalen Bremszylinders, so daß der Einbau eines weiteren Bremselements nicht notwendig ist und somit viel Platz und auch Zeit gespart wird. Ferner ist mit einem derartigen Bremszylinder auch eine gute Dosierung der Bremsleistung möglich, so daß ein Blockieren der Räder der Hinterachse vermieden werden kann.

Es ist auch möglich, daß der erfindungsgemäße Bremszylinder Verwendung findet, um bei einem Fahrzeugtyp mit sehr geringer Vorderachslast an der Hinterachse verbaut zu werden. Es ist dann möglich, bei einem Ausfall des Hinterachsbremskreises eine gute Bremsfunktion auch bei Fahrzeugen mit Niveauverstellungsmöglichkeit zu gewährleisten.

Im Rahmen dieser Erfindung bedeutet Kolben insbesondere auch Teller. Der Kolben kann mit dem Druckelement einstückig oder mehrstückig ausgebildet sein. Ferner kann der Kolben vorzugsweise auf dem Druckelement angebracht sein bzw. mit diesem verbunden sein. Unter Druckmedium wird im Rahmen dieser Erfindung insbesondere Druckluft oder Flüssigkeit eines Bremskreises verstanden. Ein Druckelement umfaßt insbesondre einen Stempel.

Wenn vorzugsweise die Wirkflächen und/oder die Drücke der Druckmedien so ausgestaltet sind, daß im Normalbetrieb die durch die zweite Wirkfläche erzeugte Kraft größer ist als die durch die dritte Wirkfläche erzeugte Kraft, erfolgt keine Bremswirkung aufgrund eines

Drückens bzw. einer Krafteinwirkung des zweiten Kolbens auf den ersten Kolben und damit verbunden dem Druckelement. Erst bei Ausfall des Betriebsbremskreises der Vorderachse fällt im wesentlichen die durch die zweite Wirkfläche erzeugte Kraft weg, so daß die durch die dritte Wirkfläche erzeugte Kraft auf die erste Wirkfläche drückt und damit auch auf das Druckelement bzw. wird damit das Druckelement bewegt.

Eine besonders einfache Ausgestaltung des Bremszylinders ist dann gegeben, wenn die zweite Wirkfläche größer ist als die dritte Wirkfläche. In diesem Fall kann im wesentlichen mit gleichen Drücken der Druckmedien im Normalbetrieb gearbeitet werden.

Vorzugsweise ist die zweite Wirkfläche ungefähr so groß wie die erste Wirkfläche.

Vorzugsweise ist wenigstens ein Dichtelement zum Trennen der Druckmedien vorgesehen. Ferner vorzugsweise ist das Dichtelement wenigstens eine Membran und/oder wenigstens ein O-Ring. Es ist sinnvoll eine sogenannte Trennung der Bremskreise vorzusehen. Das Druckmedium der Vorderachse sollte beispielsweise nicht mit dem der Hinterachse vermischt werden, und zwar bei einem Defekt des Dichtelements. Hierzu sind vorzugsweise zwei Dichtelemente mit einer dazwischenliegenden Entlüftung bzw. einem Raum vorgesehen, mittels dem das Bremsmedium bzw. Druckmedium abgelassen werden kann.

Vorzugsweise ist eine Bremsanlage mit wenigstens einem vorbeschriebenen Bremszylinder versehen. Wenn vorzugsweise ein Bremszylinder zum Bremsen eines Rades der Vorderachse eines Fahrzeugs vorgesehen ist, ist eine relativ kostengünstige Bremsanalge realisierbar. Wenn vorzugsweise für jedes Rad der Vorderachse ein Bremszylinder vorgesehen ist, ist ein gleichmäßiges Bremsen im Notfall bzw. bei Ausfall des Vorderachsbetriebsbremskreises möglich.

Ferner vorzugsweise ist ein Kraftfahrzeug mit einer der vorstehend beschriebenen Bremsanlagen versehen.

Die Erfindung wird im folgenden anhand von Ausführungsbeispielen unter Bezugnahme auf die Zeichnungen beschrieben, auf die im übrigen bezüglich der im Text nicht näher erläuterten erfindungsgemäßen Einzelheiten ausdrücklich verwiesen wird. Es zeigen:
- Fig. 1: eine Schemazeichnung einer Bremsanlage gemäß des Standes der Technik,
- Fig. 2: eine Schemazeichnung einer Bremsanlage gemäß der Erfindung,
- Fig. 3: eine schematische Schnittdarstellung eines erfindungsgemäßen Bremszylinders, und
- Fig. 4: eine schematische Schnittdarstellung eines weiteren Ausführungsbeispiels des erfindungsge- mäßen Bremszylinders.

In den folgenden Figuren sind gleiche oder entsprechende Merkmale mit denselben Bezugszeichen bezeichnet, so daß von einer erneuten Vorstellung verzichtet wird.

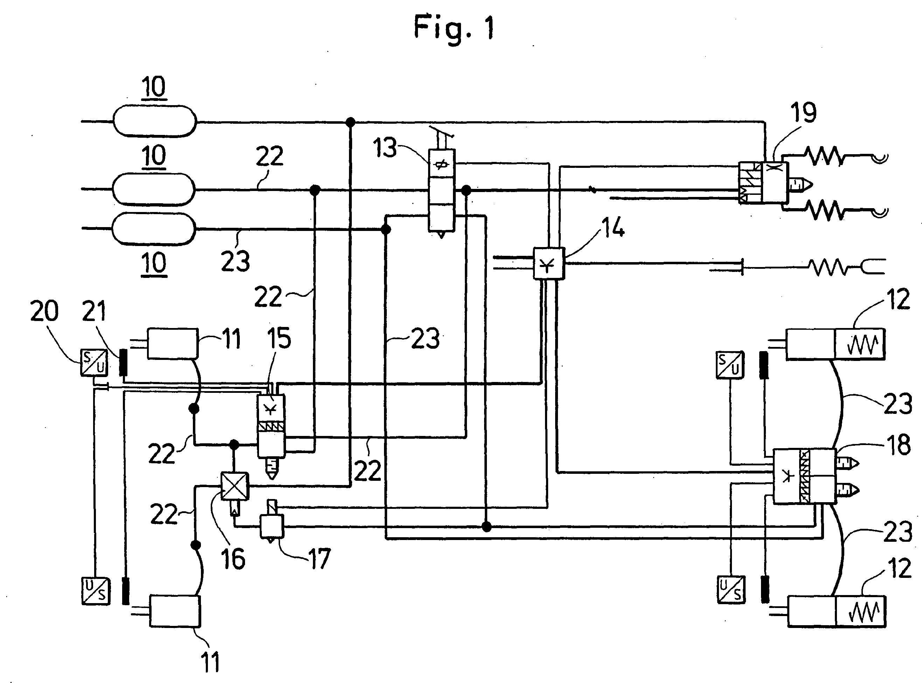

Fig. 1 zeigt eine schematische Darstellung einer Bremsanlage gemäß des Standes der Technik, bei der ein Notbremsventil Anwendung findet, das in der gleichen Weise in Sattelzugmaschinen vom Typ Actros der Firma Mercedes Benz Verwendung findet. Dargestellt sind ein Vorderachsbremskreis 22, ein Hinterachsbremskreis 23 und ein weiterer Bremskreis nämlich ein Feststellbremskreis. Druckluft wird von üblichen Druckluftaufbereitungsanlagen umfassend einen Kompressor zu Luftbehältern 10 geführt. Ober ein Betriebsbremsventil 13 werden weitere Bremselemente gesteuert. Bei der Hinterachse sorgt beispielsweise ein 2-Kanal-Druckregelmodul 18 für die Beschickung des Betriebsbremskreises der Kombi-Bremszylinder 12 der Hinterachse mit Druckluft. Es ist ferner ein zentrales Steuergerät 14 vorgesehen, das im Normalbetriebsfall die Bremsanlage steuert. Das Steuergerät 14 ist beispielsweise mit einem Anhängersteuermodul 19 verbunden, das insbesondere die Bremsanlage im Anhänger steuert.

An der Vorderachse bzw. im Bremskreis der Vorderachse ist ein Druckregelmodul 15 vorgesehen, das den Druck, der in den Bremszylindern 11 der Vorderachse zur Verfügung gestellt wird, regelt oder steuert. Eine entsprechende Regelung oder Steuerung findet insbesondere aufgrund des Zustandes der Bremsbeläge, die mit Belagsverschleißsensoren 20 gemessen werden, und über Geschwindigkeitssensoren 21 statt. Um nun bei Ausfall des Vorderachsbetriebsbremskreises 22 noch für eine ausreichende Bremswirkung an den Vorderachsen zu sorgen, ist ein Notbremsventil 16 vorgesehen, das über ein 3/2-Ventil 17, das über das Steuergerät 14 gesteuert wird und Druckluft aus dem Hinterachsbremskreis zur Steuerung des Notbremsventils 16 zur Verfügung stellt, gesteuert wird. Die über das 3/2-Ventil 17 zur Steuerung des Notbremsventils 16 zur Verfügung gestellte Druckluft öffnet und schließt das Notbremsventil 16 je nach Stellung des 3/2-Ventils 17. Bei entsprechendem Öffnen dieses Ventils wird Arbeitsluft aus dem Feststellbremskreis in den linken Bremszylinder 11 des Vorderachsbremskreises 22 zugeführt. Hierdurch ist eine Bremswirkung möglich.

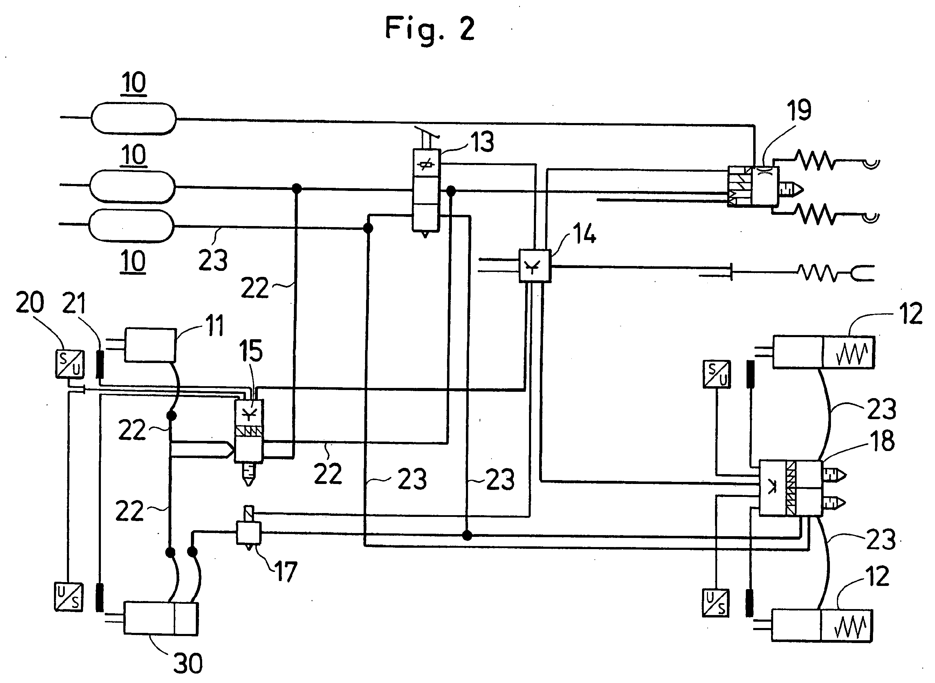

Fig. 2 zeigt schematisch eine Bremsanlage gemäß der Erfindung. Das besondere Augenmerk soll hier auf die Ausgestaltung der Bremselemente der Vorderachse gelegt werden.

Im Vergleich zum Stand der Technik fehlt hier das Notbremsventil 16, das im Normalbetrieb den Durchfluß von Druckluft im Vorderachsbetriebsbremsteil behindert und somit einen negativen Einfluß auf die Schwell- und Lösezeiten des Bremssystems hat und ferner auch den Druckabbaugradienten bei der ABS-Funktion verschlechtert.

Bei Ausfall des Vorderachsbetriebsbremskreises ist es nun möglich mittels des 3/2-Ventils 17 ausreichend Druckluft aus dem Hinterachsbetriebskreis in den Bremszylinder 30, der im Vergleich zu Bremszylindern des Standes der Technik modifiziert ist, wie im folgenden gezeigt wird, zu leiten. Es ist natürlich auch möglich, entsprechend Druckluft aus anderen Bremskreisen oder beispielsweise aus einem Druckluftreservoir für ein entsprechendes Bremsen bei Ausfall des Vorderachsbetriebsbremskreises zu verwenden.

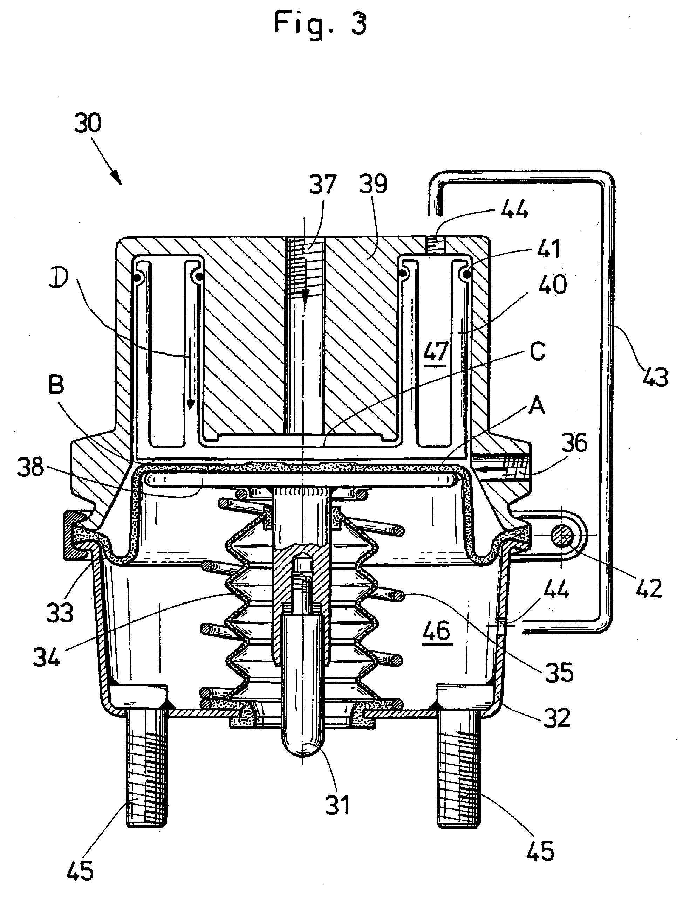

Fig. 3 zeigt eine schematische Schnittdarstellung eines erfindungsgemäßen Bremszylinders. Die an sich üblichen Elemente eines Bremszylinders 30 sind der Stempel 31, der in Wirkverbindung mit einem Bremselement wie beispielsweise Bremsbacken, die nicht dargestellt sind, stehet. Der Bremszylinder 30 wird über Befestigungsgewinde 45 an einem Gehäuse, das nicht dargestellt ist, befestigt. In dem Gehäusekopf 32 ist ein Hohlraum bzw. ein Ausweichraum 46 für den ersten Kolben 38 vorgesehen. Der Kolben 38 ist mit dem Stempel 31 verbunden. Um entsprechend die Bremszylinderelemente vor Verunreinigung zu schützen, ist ein Gummibalg 34 vorgesehen. Ferner ist eine Rückstellfeder 35 vorgesehen, die den Kolben 38 und damit auch den Stempel 31 nach oben drückt, um eine Bremswirkung zu verhindern. Druckluft beispielsweise des Vorderachsbetriebsbremskreises wird über den Bremsschlauchanschluß 36 in das Gehäuse eingeführt. Diese Druckluft drückt auf eine Membran 33 und damit mittelbar auf den Stempel 38, und zwar insbesondere auf die Fläche A des Stempels 38.

Je nachdem wie hoch dieser Druck ist, wird eine unterschiedlich große Bremswirkung erzielt. Zusätzlich zu diesen an sich üblichen Elementen ist nun ein Deckel 39 vorgesehen, der einen weiteren Kolben 40 umfaßt, der zwei Wirkflächen B und C aufweist. Die Wirkfläche B ist ungefähr so groß wie die Wirkfläche A. Es wird Druckluft von einem weiteren Kreis oder Druckluftreservoir über den Druckluftanschluß 37 in den Deckel 39 eingeführt. Diese Druckluft drückt auf die Wirkfläche C.

Um einen Ausgleich der Drücke bzw. der Druckluft zu verhindern, sind insbesondere die O-Ringe 41 vorgesehen, mittels denen eine Trennung der Drücke erreicht wird. Der Gehäusetopf 32 ist mittels eines Verschlußelements 42 wie beispielsweise ein Klammerelement mit dem Deckel 39 verbindbar.

Im Normalbetrieb wirkt ein Betriebsbremsdruck auf die Wirkflächen A und B und ein weiterer Bremsdruck bzw. Luftdruck auf die Wirkfläche C. Solange die Kraft, die auf die Wirkfläche B wirkt größer ist als die Kraft, die auf die Wirkfläche C wirkt, bleibt der Kolben in der Stellung, die dargestellt ist. Sobald allerdings der Betriebsbremsdruck, der auf die Flächen A und B wirkt kleiner wird und ggf. ganz wegfällt, wird der Kolben 40 in Richtung D ausgelenkt, und zwar aufgrund der Kraft, die auf die Wirkfläche C wirkt. In diesem Ausführungsbeispiel ist die Wirkfläche C ungefähr halb so groß wie die Wirkfläche B, so daß klar ist, daß bei Unterschreiten der Hälfte des Druckes, der auf die Wirkfläche C wirkt, durch den Betriebsbremsdruck eine Bewegung des Kolbens 40 in Richtung D und damit eine Bremswirkung erfolgt. Damit im Raum 47 bei diesem Vorgang kein Unterdruck entsteht, der die Bewegung des Kolbens 40 hemmt, ist die Ausgleichsleitung 43 vorgesehen, die an die Anschlüsse 44 für die Ausgleichsleitung 43 angeschlossen wird. Diese Ausgleichsleitung 43 ermöglicht es, daß der Ausweichraum 46 des ersten Kolbens 38 und der Ausweichraum 47 des zweiten Kolbens 40 bezüglich des Drucks ausgeglichen ist.

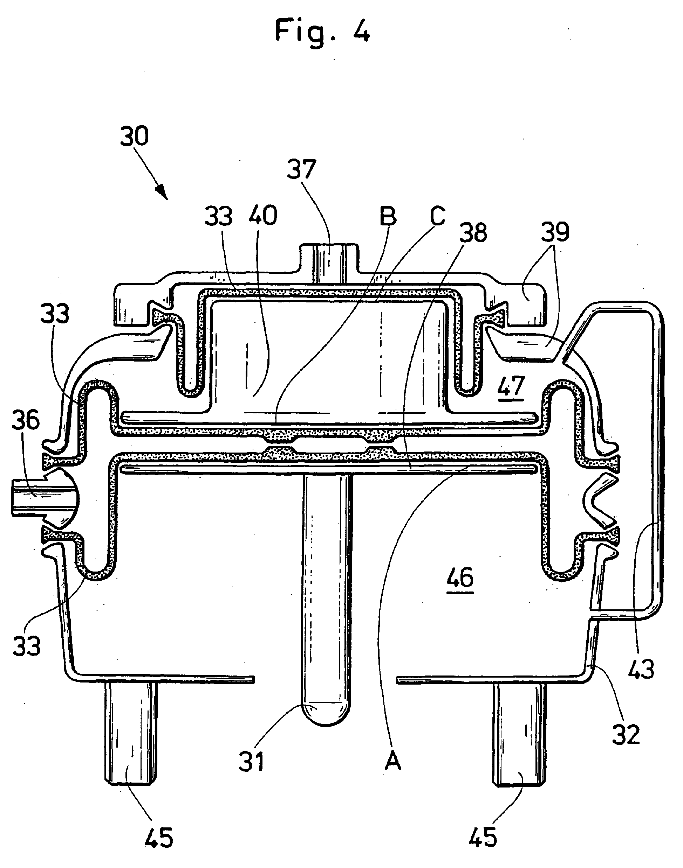

Fig. 4 zeigt eine weitere erfindungsgemäße Ausführungsform in schematischer Schnittdarstellung. Anstelle der O-Ringe sind hier zwei Membranen 33 vorgesehen. In diesem Ausführungsbeispiel ist die Wirkfläche C ein klein wenig größer als in dem vorherigen Ausführungsbeispiel. Der Bremsschlauchanschluß 36 für die Betriebsbremsfunktion ist in diesem Ausführungsbeispiel auf der linken Seite angeordnet. Der Druckluftanschluß bzw. Bremsschlauchanschluß 37 insbesondere für die Notbremsfunktion ist im oberen Bereich des Deckels 39 angeordnet.

Wenn beispielsweise der Hinterachs-back-up-Druck oder Notfalldruck in nahezu allen Betriebszuständen kleiner ist als der ausgesteuerte Betriebsbremsdruck der Vorderachse, dann wird vom Kolben 39 nur dann eine Bremswirkung verursacht, wenn ein Ausfall des Vorderachsbremskreises vorliegt. Eine Ausnahme hiervon ist bei einem fehlerfreien System der Fall, in dem die Funktion des Anti-Blockierens initiiert wurde, und zwar am entsprechenden Rad der Vorderachse. Der Back-up Hinterachsbremsdruck wird dem dargestellten Bremszylinder so zugeführt, daß er beispielsweise auf eine Fläche C wirkt, die einen Durchmesser von 70 mm hat, also eine Fläche von 38,5 cm². Damit hat diese Fläche ungefähr ein Viertel der Wirkfläche eines 24-Zoll Zylinders wie beispielsweise der Kolben 38. Die dabei entstehende Kraft wirkt nur dann auf die Bremszange, die vorzugsweise in Wirkverbindung mit dem Stempel 31 steht, wenn kein entsprechender Vorderachsbetriebsbremsdruck gegeben ist, wenn beispielsweise also die Vorratsbehälter leer sind. Gegenüber der Betätigung der Feststellbremsanlage (Federspeicher) ist der Vorteil gegeben, daß bei funktionsfähigem ABS kein Blockieren der Hinterachse vorkommt. Im Fall von ABS an dem erfindungsgemäßen Bremszylinder oder falls ein Retarder ohne gleichzeitige Betriebsbremsung über ein Fußbremsventil aktiviert wird, wird die Beaufschlagung der Fläche C mit dem Back-up Hinterachsbremsdruck durch ein in Fig. 2 dargestelltes 3/2-Magnetventil 17 abgesperrt bzw. entlüftet.

Bei ordnungsgemäßer Funktion der Betriebsbremse an der Vorderachse wirkt eine Kraft auf den Bremszylinder, die sich aus der Multiplikation des Betriebsbremsdruckes mit der Wirkfläche der 24-Zoll Membran 33 bzw. des Kolbens 38 ergibt. Der Betriebsbremsdruck wird gleichzeitig auf die Fläche B, die beispielsweise einen Durchmesser von 130 mm und damit eine Fläche von 133 cm² hat und hält den Kolben 40 in der Position "Nicht-Bremsen". Ein derartig realisiertes Flächenverhältnis stellt also sicher, daß der zusätzliche Bremszylinderteil nur dann die Radbremse betätigt, wenn vom Betriebsbremskreis der Vorderachse weniger als ungefähr ein Viertel des Back-up Hinterachsdruckes ausgesteuert wird.

Ein Vorteil der erfindungsgemäßen Einrichtung ist es, daß die Notbremsfunktion bzw. die im Stand der Technik bekannten Notbremsfunktionselemente nicht zu einer Beeinträchtigung der Schwell- und Lösezeiten und auch nicht des ABS-Druckabbaugradienten führt/führen. Die Betriebsbremszylinderverrohrung kann vorteilsweise symmetrisch gestaltet werden, da keine drosselnden Bauteile an einer Seite zum Einsatz kommen und die Wirkung eines solchen Bauteils nicht kompensiert werden muß. Es wird im Verhältnis zum Stand der Technik weder ein zusätzliches Notbremsventil noch ein Federspeicherbremszylinder benötigt, wodurch weniger Einbauraum und weniger Einbauaufwand am Fahrzeug nötig ist.

### Bezugszeichenliste

- 10: Luftbehälter
- 11: Bremszylinder
- 12: Kombibremszylinder
- 13: Betriebsbremsventil
- 14: Steuergerät
- 15: Druckregelmodul
- 16: Notbremsventil
- 17: 3/2-Ventil
- 18: 2-Kanal-Druckregelmodul
- 19: Anhängersteuermodul
- 20: Belagsverschleißsensor
- 21: Geschwindigkeitssensor
- 22: Vorderachsbremskreis
- 23: Hinterachsbremskreis
- 30: Bremszylinder
- 31: Stempel
- 32: Gehäusetopf
- 33: Gummimembran
- 34: Gummibalg
- 35: Rückstellfeder
- 36: Bremsschlauchanschluß (Betriebsbremsfunktion)
- 37: Bremsschlauchanschluß (Notbremsfunktion)
- 38: 1. Kolben
- 39: Deckel
- 40: 2. Kolben
- 41: 0-Ring
- 42: Verschlußelement
- 43: Ausgleichsleitung
- 44: Anschluß für Ausgleichsleitung
- 45: Befestigungsgewinde
- 46: Ausweichraum für 1. Kolben
- 47: Ausweichraum für 2. Kolben

## Patentansprüche

1. Bremszylinder (30) mit einem mit einem Bremselement wenigstens mittelbar verbindbaren Druckelement (31), das einen ersten Kolben (38) umfasst, wobei der erste Kolben (38) eine erste Wirkfläche (A) aufweist, auf die der Druck eines ersten Druckmediums wenigstens mittelbar wirkt, wobei ein zweiter Kolben (39) vorgesehen ist, der eine zweite Wirkfläche (B) und eine dritte Wirkfläche (C) umfasst, wobei auf die zweite Wirkfläche (B) der Druck des ersten Druckmediums wenigstens mittelbar wirkt, und wobei auf die dritte Wirkfläche (C) der Druck eines zweiten Druckmediums wenigstens mittelbar wirkt, **dadurch gekennzeichnet, dass** das erste Druckmedium ein Luftdruck oder ein Flüssigkeitsdruck ist, der im Vorderachsbremskreis (22) eines Fahrzeugs vorherrscht.

2. Bremszylinder (30) nach Anspruch 1, **dadurch gekennzeichnet, dass** das zweite Druckmedium ein Luftdruck oder ein Flüssigkeitsdruck ist, der im Hinterachsbremskreis (23), im Anhängerbremskreis oder in einem weiteren Druckelement eines Fahrzeugs vorherrscht.

3. Bremszylinder (30) nach Anspruch 1 oder 2, **dadurch gekennzeichnet, dass** ein Druckausgleichselement (43) vorgesehen ist, mittels dem der Druck in den Räumen (46, 47) ausgleichbar ist, die nicht mit dem Druckmedium beaufschlagt sind.

4. Bremszylinder (30) nach einem der Ansprüche 1 bis 3, **dadurch gekennzeichnet, dass** die Wirkflächen und/oder die Drücke der Druckmedien so ausgestaltet sind, dass im Normalbetrieb die durch die zweite Wirkfläche (B) erzeugte Kraft größer ist als die durch die dritte Wirkfläche (C) erzeugte Kraft.

5. Bremszylinder (30) nach einem der Ansprüche 1 bis 4, **dadurch gekennzeichnet, dass** die zweite Wirkfläche (B) größer ist als die dritte Wirkfläche (C).

6. Bremszylinder (30) nach einem der Ansprüche 1 bis 5, **dadurch gekennzeichnet, dass** die zweite Wirkfläche (B) ungefähr so groß ist wie die erste Wirkfläche (A).

7. Bremszylinder (30) nach einem der Ansprüche 1 bis 6, **dadurch gekennzeichnet, dass** das wenigstens eine Dichtelement (33, 41) zum Trennen der Druckmedien vorgesehen ist.

8. Bremszylinder (30) nach Anspruch 7, **dadurch gekennzeichnet, dass** das Dichtelement (33, 41) wenigstens eine Membran und/oder wenigstens ein O-Ring ist.

9. Bremsanlage mit wenigstens einem Bremszylinder (30) nach einem der Ansprüche 1 bis 8.

10. Bremsanlage nach Anspruch 9, **dadurch gekennzeichnet, dass** ein Bremszylinder (30) zum Bremsen eines Rades der Vorderachse eines Fahrzeugs vorgesehen ist.

11. Bremsanlage nach Anspruch 10, **dadurch gekennzeichnet, dass** für jedes Rad der Vorderachse ein Bremszylinder (30) vorgesehen ist.

12. Kraftfahrzeug mit Bremsanlage nach einem der Ansprüche 9 bis 11.

## Claims

1. Brake cylinder (30) with a pressure element (31) that can be connected at least indirectly to a brake element, which comprises a first piston (38), this first piston (38) having a first working surface (A) on which the pressure of a first pressure medium acts at least indirectly, a second piston (39) being provided which has a second working surface (B) and a third working surface (C), such that the pressure of the first pressure medium acts upon the second working surface (B) at least indirectly, and the pressure of the second pressure medium acts upon the third working surface (C) at least indirectly, **characterised in that** the first pressure medium is an air or liquid pressure prevailing in the first axle brake circuit (22) of a vehicle.

2. Brake cylinder (30) according to Claim 1, **characterised in that** the second pressure medium is an air pressure or a liquid pressure prevailing in the rear axle brake circuit (23), in the trailer brake circuit, or in another pressure element of a vehicle.

3. Brake cylinder (30) according to Claims 1 or 2, **characterised in that** a pressure equalisation element (43) is provided, by means of which the pressure in the chambers (46, 47) which are not pressurised by the pressure medium can be equalised.

4. Brake cylinder (30) according to any of Claims 1 to 3, **characterised in that** the working surfaces and the pressures of the pressure media are designed such that in normal operation the force produced by the second working surface (B) is larger than the force produced by the third working surface (C).

5. Brake cylinder (30) according to any of Claims 1 to 4, **characterised in that** the second working surface (B) is larger than the third working surface (C).

6. Brake cylinder (30) according to any of Claims 1 to 5, **characterised in that** the second working surface (B) is approximately the same size as the first working surface (A).

7. Brake cylinder (30) according to any of Claims 1 to 6, **characterised in that** at least one sealing element (33, 41) is provided for separating the pressure media.

8. Brake cylinder (30) according to Claim 7, **characterised in that** the sealing element (33, 41) is at least one membrane and/or at least one O-ring.

9. Brake system with at least one brake cylinder (30) according to any of Claims 1 to 8.

10. Brake system according to Claim 9, **characterised in that** a brake cylinder (30) is provided for braking a wheel of a vehicle front axle.

11. Brake system according to Claim 10, **characterised in that** a brake cylinder (30) is provided for each wheel of the front axle.

12. Motor vehicle with a brake system according to any of Claims 9 to 11.

## Revendications

1. Cylindre de frein (30) à un élément presseur (31) apte à être relié indirectement à un élément de frein, qui comprend un premier piston (38), audit premier piston (38) présentant une première aire d'actionnement (A), sur laquelle agit la pression d'un premier milieu sous pression au moins indirectement, dans lequel un deuxième piston (39) est monté, qui comprend une deuxième aire d'actionnement (B) et une troisième aire d'actionnement (C)" à la pression dudit premier milieu sous pression agissant, au moins indirectement, sur ladite deuxième aire d'actionnement et à la pression d'un deuxième milieu sous pression agissant, au moins indirectement, sur ladite troisième aire d'actionnement, **caractérisé en ce que** ledit premier milieu sous pression est une pression pneumatique ou une pression de hydraulique régnant dans le circuit de freinage de l'essieu avant (22) d'un véhicule.

2. Cylindre de frein 30 selon la revendication 1, **caractérisé en ce que** ledit deuxième milieu sous pression est une pression pneumatique ou une pression hydraulique, qui règne dans le circuit de freinage (23) de l'essieu arrière, dans le circuit de freinage de la remorque ou dans un autre élément presseur d'un véhicule.

3. Cylindre de frein (30) selon la revendication 1 ou 2, **caractérisé en ce qu'**un élément d'égalisation des pressions (43) est monté, qui sert à égaliser la pression dans les volumes (46, 47), auxquels ledit milieu sous pression n'agit pas.

4. Cylindre de frein (30) selon une quelconque des revendications 1 à 3, **caractérisé en ce que** lesdites aires d'actionnement et/ou les pressions des milieux sous pression sont conçues d'une telle façon, qu'en régime régulier l'effort engendré par ladite deuxième aire d'actionnement (B) est plus grand que l'effort engendré par ladite troisième aire d'actionnement (C).

5. Cylindre de frein (30) selon une quelconque des revendications 1 à 4, **caractérisé en ce que** ladite aire d'actionnement (B) est plus grande que ladite troisième aire d'actionnement (C).

6. Cylindre de frein (30) selon une quelconque des revendications 1 à 5, **caractérisé en ce que** ladite deuxième aire d'actionnement (B) est de la même grandeur, environ, que ladite première aire d'actionnement (A).

7. Cylindre de frein (30) selon une quelconque des revendications 1 à 6, **caractérisé en ce que** ledit au moins un élément d'étanchéité (33, 41) est disposé à séparer lesdits milieux sous pression.

8. Cylindre de frein (30) selon la revendication 7, **caractérisé en ce que** ledit élément d'étanchéité (33, 41) est au moins un diaphragme et/ou au moins un anneau torique.

9. Système de freinage comprenant au moins un cylindre de frein (30) selon une quelconque des revendications 1 à 8.

10. Système de freinage selon la revendication 9, **caractérisé en ce qu'**un cylindre de frein (30) est monté à freiner une roue à l'essieu avant d'un véhicule.

11. Système de freinage selon la revendication 10, **caractérisé en ce qu'**un cylindre de frein (30) est monté pour chaque roue à l'essieu avant.

12. Véhicule automobile à un système de freinage selon une quelconque des revendications 9 à 11.
